# EUROPÄISCHE PATENTSCHRIFT

(11) **EP 2 454 111 B1**
(45) Veröffentlichungstag und Bekanntmachung des Hinweises auf die Patenterteilung: **23.10.2013**
(21) Anmeldenummer: 11721727.3
(22) Anmeldetag: 15.04.2011
(51) Int. Cl.: B60J 10/00

(54) **HALTELEISTE ZUM HALTEN UND POSITIONIEREN EINER DICHTUNG**
BAR FOR HOLDING AND POSITIONING A SEALING STRIP
LAME POUR SUPPORTER ET POSITIONER UN JOINT D'ETAINCHEITE

(30) Priorität: 23.04.2010 DE 102010018298
(43) Veröffentlichungstag der Anmeldung: 23.05.2012
(73) Patentinhaber: Grohmann Engineering GmbH, 54595 Prüm (DE)
(72) Erfinder: GROHMANN, Klaus, 54597 Hersdorf (DE); THOMMES, Lothar, 54634 Bitburg (DE)
(74) Vertreter: Kohlmann, Kai
(86) Internationale Anmeldenummer: PCT/EP2011/056018
(87) Internationale Veröffentlichungsnummer: WO 2011/131583

(56) Entgegenhaltungen:
- EP-B1- 0 849 106
- WO-A1-2007/082915
- FR-A1- 2 934 554

## Beschreibung

Die Erfindung betrifft eine Halteleiste zum Halten und Positionieren einer Dichtung mit Befestigungseinrichtungen, die auf der einen Längsseite der Halteleiste angeordnet und jeweils durch eine Unterbrechung voneinander getrennt sind. Derartige Halteleisten kommen insbesondere in Applikationsanlagen für selbstklebende Dichtungen an Türen von Kraftfahrzeugen zum Einsatz.

Die Dichtung für eine Kraftfahrzeugtür wird mit dem selbstklebenden Klebestreifen auf einer Klebefläche längs des Türumfangs aufgelegt und daran angedrückt. Das automatisierte Auflegen und Andrücken erfolgt mit einer Applikationsanlage für selbstklebende Dichtungen, die eine Vielzahl von Fahreinheiten mit jeweils einem Konturelement umfassen, wobei jede Fahreinheit im wesentlichen senkrecht zu dem ihr zugeordneten Abschnitt der Klebefläche an der Tür des Kraftfahrzeugs hin- und herbewegbar ist. Weil die Fahreinheiten sich zumindest teilweise in unterschiedlichen Richtungen bewegen, ist jeder Fahreinheit eine gesonderte Haltleiste zugeordnet, die sich unabhängig von den Halteleisten benachbarter Fahreinheiten bewegen lässt.

Zur Montage der Dichtung wird diese auf die sich längs des Türumfangs angeordneten Halteleisten aufgesteckt und über ein Widerlager, beispielsweise in Form einer Hinterschneidung gesichert. Dann werden die gesamte Applikationsanlage und die Fahreinheiten derart zur Fahrzeugtür bewegt, dass die Fahreinheiten mit der aufgesteckten Dichtung sich in einem definierten Abstand zu der Klebefläche an der Kraftfahrzeugtür befinden. Sodann wird die geringfügig aufgeweitete Dichtung mit der Klebeschicht in Richtung der Klebefläche bewegt und dort positioniert. Schließlich wird die Dichtung mit Andrückeinrichtungen mit einer definierten Andrückkraft gegen die Klebefläche an der Tür gedrückt. Derartige Applikationsanlagen der Anmelderin werden bereits seit 1987 in der Automobilindustrie eingesetzt. In der Anfangszeit wurden die einzelnen Halteleisten als Federbleche ausgeführt, die auf einer Längsseite mit von dieser Seite ausgehenden Kammschlitzen und auf der anderen Längsseite mit Bohrungen versehen waren, um die Halteleiste an den Konturelementen der Fahreinheiten anzuschrauben.

Mit komplizierter werdenden Konturen der Kraftfahrzeugtüren und damit auch der Klebeflächen für die Dichtungen reichte die Flexibilität der bekannten aus Federblech bestehenden, mit Kammschlitzen versehenen Halteleisten teilweise nicht mehr aus. Insbesondere im Übergangsbereich zum Scheibenrahmen kann es bei modernen Türgeometrien an einer ausreichenden Biegsamkeit der Halteleisten, insbesondere in der Ebene der Halteleiste fehlen.

Um eine individuelle und deshalb kostenträchtige Anfertigung von Halteleisten für derartige Problembereiche zu vermeiden, wird in der EP 0 849 106 B1 eine Halteleiste beschrieben, die aus einem durchgehenden, in der Draufsicht im wesentlichen mäanderförmigen Band aus Kunststoffmaterial besteht. Das mäanderförmige Band weist auf der einen Längsseite durch Unterbrechungen voneinander getrennte Befestigungseinrichtungen auf, während auf der anderen Seite Federzungen von den Schenkeln und Stegen des mäanderförmigen Bandes gebildet werden. Auf die Federzungen wird die zu applizierende Dichtungen aufgesteckt. Aufgrund der Mäanderform des durchgehenden Bandes ist die Halteleiste außerordentlich flexibel und passt sich jeder Türkontur, auch in Problembereichen, die eine hohe Biegsamkeit der Halteleiste auch in deren Ebene erfordern, an. Die durch die Mäanderform bedingte Flexibilität ermöglicht es, lediglich eine durchgehende Halteleiste längs der Konturelemente zu verlegen und wie üblich dort anzuschrauben.

Der Vorteil der durch die Mäanderform bedingten großen Flexibilität, wird jedoch durch den Nachteil erkauft, dass das Aufstecken der Dichtungen auf die Federzungen Probleme bereiten kann, weil die Federzungen im Laufe der Zeit in Folge von Materialermüdung nicht mehr einwandfrei fluchten. Des Weiteren kann die Materialermüdung in Verbindung mit der hohen Flexibilität der mäanderförmigen Halteleiste zu einer ungleichmäßigen Druckverteilung des Klebestreifens an der Klebefläche führen.

Ausgehend von diesem Stand der Technik liegt der Erfindung die Aufgabe zu Grunde, eine Halteleiste vorzuschlagen, die eine hohe Flexibilität zur Applikation von Dichtungen auch in Problembereichen moderner Türgeometrien aufweist, die auch nach längerem Gebrauch ein einfaches Aufstecken der Dichtung und eine gleichmäßigere Druckverteilung beim Andrücken der Dichtung ermöglicht.

Diese Aufgabe wird bei einer Halteleiste der eingangs erwähnten Art dadurch gelöst, dass die Halteleiste auf der anderen, den Befestigungseinrichtungen gegenüberliegenden Längsseite einen durchlaufenden Steg aufweist und zwischen dem Steg und jeder Befestigungseinrichtung mindestens eine Öffnung in der Halteleiste angeordnet ist.

Überraschend hat sich gezeigt, dass die Öffnungen in der Halteleiste die geforderte hohe Flexibilität zur Applikation von Dichtungen auch in Problembereichen gewährleisten. Insbesondere ist die erfindungsgemäße Halteleiste in der Ebene der Halteleiste in ausreichendem Maße biegsam. Die Biegsamkeit der Halteleiste um eine in deren Ebene liegende Achse resultiert aus den federelastischen Eigenschaften des Materials der Halteleiste. Als Material kommt vorzugsweise Kunststoff zum Einsatz. Abweichend zu der durchgehenden Halteleiste nach EP 0 849 106 B1 wird jedoch jede Fahreinheit der Applikationsanlage mit einer eigenen Halteleiste ausgerüstet.

Der durchlaufende Steg der Halteleiste erleichtert das Aufstecken der Dichtung, da nicht miteinander fluchtende Federzungen bei der erfindungsgemäßen Halteleiste konstruktionsbedingt ausgeschlossen sind. Des Weiteren unterstützt der den Befestigungseinrichtungen gegenüberliegende durchlaufende Steg eine gleichmäßige Druckverteilung beim Andrücken der Dichtung gegen die Klebefläche.

Da sich Materialermüdungen der erfindungsgemäßen Halteleiste auf das Aufstecken der Dichtung nicht auswirken und die Gleichmäßigkeit der Druckverteilung praktisch nicht beeinträchtigen, können die Wechselintervalle der Halteleisten vergrößert werden, wodurch die Betriebskosten der Applikationsanlage sinken und Wartungsstillstände reduziert werden.

In vorteilhafter Ausgestaltung der Erfindung umfasst jede Befestigungseinrichtung zur Befestigung der Halteleiste an dem Konturelement mindestens ein Befestigungsloch. Bevorzugt wird jede Befestigungseinrichtung der Halteleiste von einem einzigen Befestigungsloch zur Aufnahme einer Schraube gebildet, wie dies auch bei den bekannten Halteleisten der Fall ist.

Bei der Erprobung der erfindungsgemäßen Halteleiste hat es sich als vorteilhaft herausgestellt, wenn jeder Befestigungseinrichtung mehrere, insbesondere längliche Öffnungen mit parallel zueinander verlaufenden Längsseiten in der Halteleiste zugeordnet sind. Wenn diese Öffnungen in Richtung der zugeordneten Befestigungseinrichtung aufeinander zu laufen, wird in Verbindung mit den zwischen den Befestigungseinrichtungen befindlichen Unterbrechungen die Biegsamkeit der Halteleiste in deren Ebene verbessert.

Die länglichen Öffnungen enden auf der den Befestigungseinrichtungen abgewandeten Seite sämtlich auf Höhe des durchlaufenden Stegs. Die Unterbrechungen zwischen den Befestigungseinrichtungen erstrecken sich ebenfalls maximal bis zu dem Steg der Halteleiste.

Die zunächst schlitzförmigen Unterbrechungen erweitern sich von dem Steg in Richtung der die Befestigungseinrichtungen aufweisenden Längsseite der Halteleiste. Durch die Geometrie der Erweiterung lässt sich die Spannungsverteilung in der Halteleiste optimieren.

Wie an sich aus dem Stand der Technik bekannt, weist auch die erfindungsgemäße Halteleiste vorzugsweise ein Widerlager, beispielsweise in Form einer Ausnehmung, für die sichere Halterung der Dichtung auf.

Nachfolgend wird die Erfindung anhand der beispielhaften Zeichnungen näher erläutert. Es zeigen:
- **Figur 1**: eine teilweise Seitenansicht einer Fahreinheit mit Konturelement und eine Andrückeinrichtung einer Applikationsanlage, mit der eine Dichtung an einer Kraftfahrzeugtür montiert wird,
- **Figur 2**: eine Draufsicht auf eine erfindungsgemäße Halteleiste sowie
- **Figur 3**: einen Querschnitt durch die Halteleiste nach Figur 2.

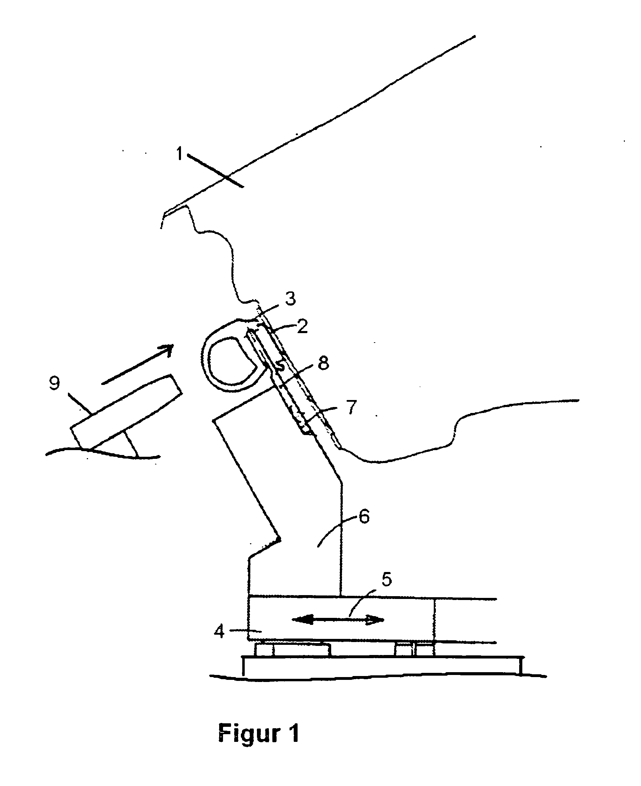

In Figur 1 ist teilweise eine Kfz-Tür (1) mit einer umlaufenden Klebefläche (2) dargestellt, auf der eine Dichtung (3) befestigt werden soll. Das geschieht mittels einer Applikationsanlage, zu der eine Vielzahl von Fahreinheiten (4) gehören, die nebeneinander und der Türkontur folgend angeordnet sind. Jede Fahreinheit (4) ist in Richtung des Doppelpfeils (5) hin- und herbewegbar, wobei die Bewegungsrichtung jeder Fahreinheit (4) zum jeweils zugeordneten Abschnitt der Türkontur bzw. der Klebefläche (2) ausgerichtet ist. Auf der Fahreinheit (4) ist ein Konturelement (6) mit einer Konturfläche (7) befestigt. An diese Konturfläche (7) ist eine Halteleiste (8) angeschraubt, die über die Konturfläche (7) vorsteht und auf deren freien Rand die Dichtung (3) aufgeschoben ist.

Zur Applikation der Dichtung (3) wird diese auf die Halteleiste (8) aufgesteckt. Dann werden die Fahreinheiten (4) so bewegt, dass die Dichtung (3) sich in einer vorbestimmten Position gegenüber der Klebefläche (2) befindet. Dann wird die Dichtung (3) mit Hilfe einer Andrückeinrichtung (9) mit vorbestimmter Andrückkraft gegen die Klebefläche (2) gepresst.

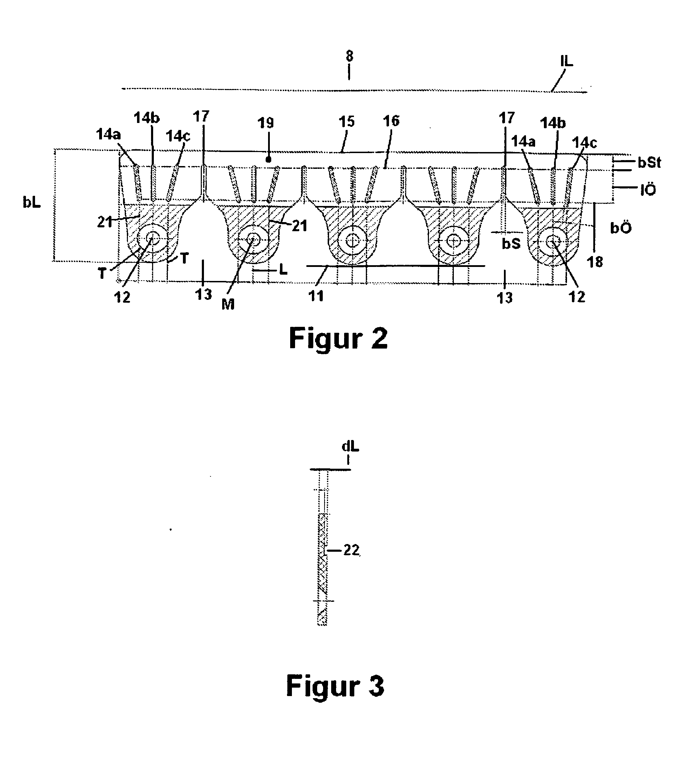

Die Einzelheiten der in Figur 1 nur angedeuteten Halteleiste (8) ergeben sich aus den Figuren 2 und 3. Die aus einem flachen Kunststoffmaterial bestehende Halteleiste (8) weist auf der einen Längsseite (11) fünf Befestigungseinrichtungen (12) in Form von Bohrlöchern auf, die jeweils durch Unterbrechungen (13) voneinander getrennt sind.

Jeder Befestigungseinrichtung (12) sind drei als Langlöcher ausgebildete Öffnungen (14 a - c) zugeordnet.

Die Langlöcher enden im Abstand von der anderen Längsseite (15) in Höhe einer in Längsrichtung der Halteleiste verlaufenden Linie (16), die einen durchlaufenden Steg (19) in Richtung der Längsseite (11) begrenzt. Bis an die Linie (16) reicht auch ein als Schlitz (17) mit der Breite bₛ ausgebildeter Teil der Unterbrechung (13) heran, der sich in Richtung der Längsseite (11) kelchartig erweitert. In Höhe einer in Längsrichtung der Halteleiste (8) verlaufenden weiteren Linie (18) enden die als Langlöcher ausgebildeten Öffnungen (14 a - c) im Abstand von den Befestigungseinrichtungen (12).

Das Verhältnis von Länge l_{ö} zu Breite b_{ö} der Langlöcher beträgt in dem gezeigten Ausführungsbeispiel etwa 9:1. Das Verhältnis der Länge l_{ö} der Langlöcher zur Breite b_{St} des Steges beträgt etwa 2:1.

Die Langlöcher laufen in Richtung der Befestigungsbohrung (12) derart aufeinander zu, dass die senkrecht zur Längsseite (11) verlaufenden Tangenten (T) an der Befestigungsbohrung durch die zur Längsseite (11) weisenden Schmalseiten der beiden äußeren Langlöcher (14 a, 14 c) verlaufen, während die senkrecht zu der Längsseite (11) und durch den Mittelpunkt (M) der Befestigungsbohrung verlaufende Linie (L) durch die Schmalseite des mittleren Langlochs (14 b) verläuft.

Die vorstehenden geometrischen Verhältnisse wurden in Versuchsreihen für eine Halteleiste (8) mit einer Länge l_{L} von etwa 110 mm und einer Breite b_{L} von etwa 30 mm ermittelt.

Die Erfindung ist jedoch nicht auf die in dem Ausführungsbeispiel dargestellte und vorstehend beschriebene Anordnung und Ausbildung der Öffnungen (14 a - c) zwischen dem Steg (19) und jeder Befestigungseinrichtung (12) beschränkt. Insbesondere können die länglichen Öffnungen (14 a - c) auch einer Kurve folgen, abweichende Verhältnisse zwischen Länge und Breite aufweisen sowie in ihrer der jeweiligen Befestigungseinrichtung (12) zugeordneten Anzahl variieren.

Aus Figur 3 ist erkennbar, dass die Dicke d_{L} der Halteleiste im Verhältnis zu deren Länge l_{L} (11) relativ gering ist, um nicht nur bei Biegungen der Halteleiste in deren Ebene, sondern auch beim Biegen der Halteleiste um eine Achse in deren Ebene eine hinreichende Flexibilität zu gewährleisten. Bei der dargestellten Länge l_{L} der Halteleiste von etwa 110 mm beträgt die Dicke d_{L} beispielsweise 2 mm.

Oberhalb der durch die Unterbrechungen (13) voneinander getrennten Befestigungsabschnitte (21) ist in die rückwärtige Oberfläche der Halteleiste (8) eine Längsnut (22) als Widerlager für die Dichtung (3) eingebracht.

### Bezugszeichenliste

| **Nr.** | **Bezeichnung** | **Nr.** | **Bezeichnung** |
|---|---|---|---|
| 1 | Kfz-Tür | 20 | - |
| 2 | Klebefläche | 21 | Befestigungsabschnitte |
| 3 | Dichtung | 22 | Längsnut |
| 4 | Fahreinheit | | |
| 5 | Doppelpfeil | l_{L} | Länge Leiste |
| 6 | Konturelement | b_{L} | Breite Leiste |
| 7 | Konturfläche | d_{L} | Dicke Leiste |
| 8 | Halteleiste | bₛₜ | Breite Steg |
| 9 | Andrückeinrichtung | l_{ö} | Länge Öffnung |
| 10 | - | b_{ö} | Breite Öffnung |
| 11 | Längsseite | bₛ | Breite Schlitz |
| 12 | Befestigungseinrichtungen | | |
| 13 | Unterbrechung | | |
| 14 a - c | Öffnungen | | |
| 15 | Längsseite | | |
| 16 | Linie | | |
| 17 | Schlitz | | |
| 18 | Linie | | |
| 19 | Steg | | |

## Patentansprüche

1. Halteleiste zum Halten und Positionieren einer Dichtung mit Befestigungseinrichtungen (12), die auf der einen Längsseite (11) der Halteleiste angeordnet und jeweils durch eine Unterbrechung (13) voneinander getrennt sind, **dadurch gekennzeichnet, dass** die Halteleiste (8) auf der anderen Längsseite (15) einen durchlaufenden Steg (19) aufweist und zwischen dem Steg (19) und jeder Befestigungseinrichtung (12) mindestens eine Öffnung (14 a - c) in der Halteleiste angeordnet (8) ist.

2. Halteleiste nach Anspruch 1, **dadurch gekennzeichnet, dass** jede Befestigungseinrichtung (12) mindestens ein Befestigungsloch umfasst.

3. Halteleiste nach Anspruch 1 oder 2, **dadurch gekennzeichnet, dass** jeder Befestigungseinrichtung (12) mehrere Öffnungen (14 a -c) in der Halteleiste (8) zugeordnet sind.

4. Halteleiste nach einem der Ansprüche 1 bis 3, **dadurch gekennzeichnet, dass** die Öffnungen (14 a - c) in der Halteleiste (8) länglich mit parallel zueinander verlaufenden Längsseiten ausgebildet sind.

5. Halteleiste nach Anspruch 4, **dadurch gekennzeichnet, dass** die Öffnungen (14 a - c) als Langlöcher ausgebildet sind.

6. Halteleiste nach Anspruch 4 oder 5, **dadurch gekennzeichnet, dass** die Öffnungen in Richtung der Befestigungseinrichtung (12) aufeinander zulaufen.

7. Halteleiste nach einem der Ansprüche 1 bis 6, **dadurch gekennzeichnet, dass** sich die Unterbrechungen (13) in Richtung der einen Längsseite (11) der Halteleiste (8) erweitern.

8. Halteleiste nach einem der Ansprüche 1 bis 7, **dadurch gekennzeichnet, dass** die Halteleiste (8) ein Widerlager für die Dichtung aufweist.

9. Halteleiste nach einem der Ansprüche 1 bis 6, **dadurch gekennzeichnet, dass** die Haltleiste (8) aus Kunststoff besteht.

10. Applikationsanlage für Dichtungen an Türen von Fahrzeugen umfassend mehrere Fahreinheiten mit jeweils einem Konturelement die in Richtung einer Klebefläche an der Tür des Kraftfahrzeugs hin und her bewegbar ist, **dadurch gekennzeichnet, dass** an jedem Konturelement (6) eine Halteleiste (8) nach einem oder mehreren der Ansprüche 1 bis 9 befestigt ist.

## Claims

1. A retaining strip for holding and positioning a seal comprising fastening devices (12) which are disposed on one longitudinal side (11) of the retaining strip and which are separated from each other by a gap (13), **characterized in that** the retaining strip (8) has a continuous web (19) on the other longitudinal side (15) and at least one opening (14a-c) is disposed in the retaining strip (8) between the web (19) and each fastening device (12).

2. The retaining device according to claim 1, **characterized in that** each fastening device (12) comprises at least one fastening hole.

3. The retaining device according to claim 1 or 2, **characterized in that** a plurality of openings (14a-c) in the retaining strip (8) are assigned to each fastening device (12).

4. The retaining device according to any one of claims 1 to 3, **characterized in that** the openings (14a-c) in the retaining strip (8) are configured to be elongate with longitudinal sides running parallel to one another.

5. The retaining device according to claim 4, **characterized in that** the openings (14a-c) are configured as elongate holes.

6. The retaining device according to claim 4 or 5, **characterized in that** the openings run towards one another in the direction of the fastening device (12).

7. The retaining device according to any one of claims 1 to 6, **characterized in that** the gaps (13) expand in the direction of the one longitudinal side (11) of the retaining strip (8).

8. The retaining device according to any one of claims 1 to 7, **characterized in that** the retaining strip (8) has a counter-bearing for the seal.

9. The retaining device according to any one of claims 1 to 6, **characterized in that** the retaining strip (8) consists of plastic.

10. An application system for seals on doors of vehicles, comprising several mobile units, each having a contour element, which can be moved towards and away from an adhesion surface on the door of the motor vehicle, **characterized in that** a retaining strip (8) according to one or more of claims 1 to 9 is fastened to each contour element (6).

## Revendications

1. Baguette de maintien pour maintenir et positionner un joint avec des systèmes de fixation (12) qui sont placés sur l'un des côtés longitudinaux (11) de la baguette de maintien et qui sont séparées les uns des autres chacun par une interruption (13), **caractérisée en ce que** sur l'autre côté longitudinal (15), la baguette de maintien (8) comporte une barrette (19) continue et entre la barrette (19) et chaque système de fixation (12), au moins une ouverture (14 a à c) est placée dans la baguette de maintien (8).

2. Baguette de maintien selon la revendication 1, **caractérisée en ce que** chaque système de fixation (12) comprend au moins un trou de fixation.

3. Baguette de maintien selon la revendication 1 ou la revendication 2, **caractérisée en ce qu'**à chaque système de fixation (12) sont associées plusieurs ouvertures (14 a à c) dans la baguette de maintien (8).

4. Baguette de maintien selon l'une quelconque des revendications 1 à 3, **caractérisée en ce que** les ouvertures (14 a à c) dans la baguette de maintien (8) sont conçues en version oblongue, avec des côtés longitudinaux se rejoignant à la parallèle.

5. Baguette de maintien selon la revendication 4, **caractérisée en ce que** les ouvertures (14 a à c) sont conçues en tant que trous oblongs.

6. Baguette de maintien selon la revendication 4 ou la revendication 5, **caractérisée en ce que** les ouvertures (12) se rejoignent.

7. Baguette de maintien selon l'une quelconque des revendications 1 à 6, **caractérisée en ce que** les interruptions (13) s'évasent en direction du côté longitudinal (11) de la baguette de maintien (8).

8. Baguette de maintien selon l'une quelconque des revendications 1 à 7, **caractérisée en ce que** la baguette de maintien (8) comporte une butée pour le joint.

9. Baguette de maintien selon l'une quelconque des revendications 1 à 6, **caractérisée en ce que** la baguette de maintien (8) est constituée de matière plastique.

10. Installation pour l'application de joints sur des portières de véhicules, comprenant plusieurs unités de déplacement avec chacune un élément de contour qui sont déplaçables en aller et retour en direction d'une surface de collage sur la portière du véhicule automobile, **caractérisée en ce que** sur chacun élément de contour (6) est fixée une baguette de maintien (8) selon l'une ou plusieurs des revendications 1 à 9.
